# EUROPÄISCHE PATENTSCHRIFT

(11) **EP 2 386 238 B1**
(45) Veröffentlichungstag und Bekanntmachung des Hinweises auf die Patenterteilung: **06.03.2019**
(21) Anmeldenummer: 11400006.0
(22) Anmeldetag: 07.01.2011
(51) Int. Cl.: A47L 9/28, H05B 33/08, H05B 37/02

(54) **Staubsauger mit einem leistungsgeregelten Saugmotor**
Vacuum cleaner with an output-controlled suction engine
Aspirateur doté d'un moteur d'aspiration à puissance réglée

(30) Priorität: 23.03.2010 DE 102010012643
(43) Veröffentlichungstag der Anmeldung: 16.11.2011
(73) Patentinhaber: Stein & Co. GmbH, D-42553 Velbert (DE)
(72) Erfinder: Stein, Thomas, 42553 Velbert (DE)
(74) Vertreter: Marschall, Stefan

(56) Entgegenhaltungen:
- EP-A2- 0 681 808
- US-A- 4 731 898
- US-A1- 2009 256 485

## Beschreibung

Die Erfindung bezieht sich auf einen Staubsauger mit einem leistungsgeregelten Saugmotor und einer Anzeige von Betriebszuständen bzw. Betriebseinstellungen durch Leuchtmittel, wie LED's, in einem transparenten Anzeigefeld, wobei die Leuchtmittel betriebsabhängig steuerbar sind.

Anzeigevorrichtungen mit Leuchtmittel für einzelne Betriebszustände von Staubsaugern sind in vielfältigen Ausgestaltungen bekannt und werden für das Anzeigen von Betriebszuständen durch Leuchtmittel angezeigt.

Ein Bespiel ist in der EP-A-0681808 gegeben.

Es hat sich aber gezeigt, dass eine Anzeige von eingestellten Saugleistungen des Staubsaugers nicht in Abhängigkeit des aktuellen Betriebszustandes ausreichend erkennbar ist.

Die Aufgabe der Erfindung ist es, die eingestellte Saugleistung auf einfache Weise durch ein auffälliges Signal zu übermitteln, um eine Kontrolle der eingestellten Saugleistung für einen aktuellen Einsatz des Staubsaugers zu ermöglichen und einen ordnungsgemässen Einsatz zu gewährleisten.

Die Lösung dieser Aufgabe erfolgt erfindungsgemäss dadurch, dass das Anzeigefeld ringförmig ausgebildet ist und mehrere Leuchtmittel aufweist, die über eine elektrische Steuereinheit nacheinander in Form eines umlaufenden Lichtes ansteuerbar sind und die Steuereinheit in Abhängigkeit einer eingestellten Leistung des Saugmotors eine Schaltfrequenz der Leuchtmittel variiert und jedem Leistungszustand des Saugmotors eine andere Schaltfrequenz zuordnet.

Der Vorteil hierbei ist es, dass ein symbolisiertes umlaufendes Licht durch die Schaltfrequenz der Leuchtmittel im ringförmigen Anzeigefeld anzeigbar ist, die für den Benutzer ein Kriterium für die eingestellte Saugleistung vermittelt.

Eine vorteilhafte Ausbildung besteht darin, dass die Steuereinheit eine Auswerteeinheit als Microcontroller aufweist, die von einer manuellen bzw. sensorischen Einstellung als Phasenanschnittsteuerung des Saugmotors ansteuerbar ist, wobei die Schaltfrequenz der Leuchtmittel eine Umlaufgeschwindigkeit im Anzeigefeld symbolisiert, die durch eine Leistungseinstellung des Saugmotors über ein generiertes Signal der Auswerteeinheit und einer Anzeigesteuerung einstellbar ist.

Zur Darstellung weiterer Betriebsparameter unter Ausnutzung der vorliegenden Elemente wird vorgeschlagen, dass die Steuereinheit mit zusätzlichen Sensoren verbunden ist, die Betriebszustände detektieren und über die Auswerteeinheit den Betriebszustand durch zusätzliche Farbeinstellungen der Leuchtmittel im Anzeigefeld anzeigen.

In der Zeichnung ist ein Ausführungsbeispiel der Erfindung schematisch dargestellt. Es zeigen:

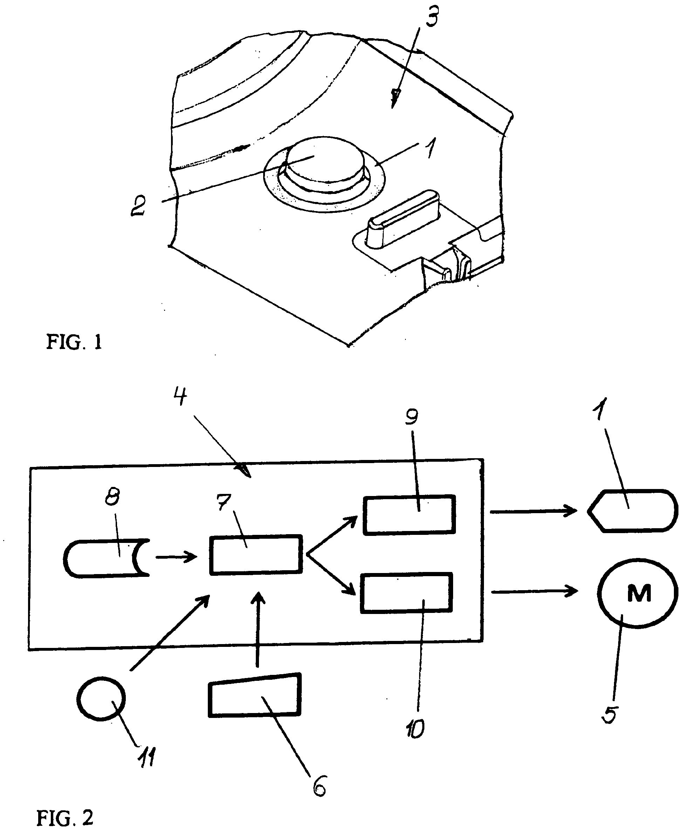

- Fig. 1: einen Kreisring mit transparenter Abdeckung zur Aufnahme von mehreren ansteuerbaren Leuchtmitteln als Anzeigefeld mit einem zentralen Einschaltknopf eines Staubsaugergehäuses und
- Fig. 2: einen prinzipiellen Aufbau einer Steuereinheit mit zugeordneten Eingabe- und Ausgangssignalen

Bei der dargestellten Anordnung ist ein Anzeigefeld 1 als Kreisring um einen Einschaltknopf 2 im Staubsaugergehäuse 3 angeordnet. Das Anzeigefeld 1 besitzt eine transparente Abdeckung und eine Vielzahl nicht näher dargestellter LED-Leuchtmittel, die mit unterschiedlichen Schaltfrequenzen nacheinander ansteuerbar sind.

Die im Anzeigefeld 1 angeordneten Leuchtmittel sind als symbolisiertes umlaufendes Licht über eine Steuereinheit 4 ansteuerbar und eine entsprechende Schaltfrequenz der Leuchtmittel ist entsprechend der eingestellten Leistung eines Saugmotors 5 des Staubsaugers einstellbar. Hierzu wird die Steuereinheit 4 mit einer Auswerteeinheit 7 als Microcontroller über ein Element 6 entsprechend mit einem Signal versorgt. Die Auswerteeinheit 7 erzeugt ein Signal für eine Anzeigensteuerung 9, die eine Umlaufgeschwindigkeit der einzelnen Leuchtmittel im Anzeigefeld 1 symbolisiert. Es ist dabei zweckmässig, dass auch der Saugmotor 5 über die Auswerteeinheit 7 und eine Motorsteuerung 10 steuerbar ist.

In dieser Ausbildung ist zusätzlich ein Sensor 11 der zentralen Steuereinheit 4 zugeordnet, über den Betriebszustände der Auswerteeinheit 7, wie Füllzustand eines Filterbeutels, durch zusätzliche Farbeinstellungen oder durch Blinkeffekte der Leuchtmittel über die Anzeigesteuerung 1 im Anzeigefeld 1 angezeigt werden.

## Patentansprüche

1. Staubsauger mit einem leistungsgeregelten Saugmotor und einer Anzeige von Betriebszuständen bzw. Betriebseinstellungen durch Leuchtmittel, wie LED's, in einem transparenten Anzeigefeld, wobei die Leuchtmittel betriebsabhängig steuerbar sind, **dadurch gekennzeichnet, dass** das Anzeigefeld (1) ringförmig ausgebildet ist und mehrere Leuchtmittel aufweist, die über eine elektrische Steuereinheit (4) nacheinander in Form eines umlaufenden Lichtes ansteuerbar sind und die Steuereinheit (4) in Abhängigkeit einer eingestellten Leistung des Saugmotors (5) eine Schaltfrequenz der Leuchtmittel variiert und jedem Leistungszustand des Saugmotors (5) eine andere Schaltfrequenz zuordnet.

2. Staubsauger nach Anspruch 1, **dadurch gekennzeichnet, dass** die Steuereinheit (4) eine Auswerteeinheit (7) als Microcontroller aufweist, die von einer manuellen bzw. sensorischen Einstellung als Phasenanschnittsteuerung des Saugmotors (5) ansteuerbar ist, wobei die Schaltfrequenz der Leuchtmittel eine Umlaufgeschwindigkeit im Anzeigefeld (1) symbolisiert, die durch eine Leistungseinstellung des Saugmotors (5) über ein generiertes Signal der Auswerteeinheit (7) und einer Anzeigesteuerung (9) einstellbar ist.

3. Staubsauger nach einem der Ansprüche 1 bis 2, **dadurch gekennzeichnet, dass** die Steuereinheit (4) mit zusätzlichen Sensoren (11) verbunden ist, die Betriebszustände detektieren und über die Auswerteeinheit (7) den Betriebszustand durch zusätzliche Farbeinstellungen der Leuchtmittel im Anzeigefeld (1) anzeigen.

## Claims

1. A vacuum cleaner having a power-regulated vacuum motor and a display of operating states or operating settings by means of lamps, such as LEDs, in a transparent display field, the lamps being controllable in an operation-dependent manner, **characterized in that** the display field (1) is constructed in an annular manner and has a plurality of lamps, which are controllable one after the other in the form of a circumferential light by means of an electric control unit (4) and the control unit (4) varies a switching frequency of the lamps as a function of a set power of the vacuum motor (5) and assigns a different switching frequency to each power state of the vacuum motor (5).

2. The vacuum cleaner according to Claim 1, **characterized in that** the control unit (4) has an evaluation unit (7) as microcontroller, which can be controlled by a manual or sensory adjustment as a phase-fired control of the vacuum motor (5), wherein the switching frequency of the lamps symbolizes a rotational speed in the display field (1), which can be adjusted by means of a power setting of the vacuum motor (5) by means of a generated signal of the evaluation unit (7) and a display control (9) .

3. The vacuum cleaner according to one of Claims 1 to 2, **characterized in that** the control unit (4) is connected to additional sensors (11), which detect operating states and display the operating state via the evaluation unit (7) by means of additional colour settings of the lamps in the display field (1).

## Revendications

1. Aspirateur avec un moteur d'aspiration à puissance régulée et un affichage des états de fonctionnement ou des réglages de fonctionnement par des moyens lumineux, comme des diodes électroluminescentes (DEL), dans un champ d'affichage transparent, les moyens lumineux pouvant être commandés en fonction du fonctionnement, **caractérisé en ce que** le champ d'affichage (1) est constitué de forme annulaire et comporte plusieurs moyens lumineux, qui peuvent être pilotés l'un derrière l'autre sous la forme d'une lumière périphérique par le biais d'une unité de commande électrique (4) et l'unité de commande (4) fait varier une fréquence de commutation des moyens lumineux en fonction d'une puissance réglée de l'aspirateur (5) et attribue une autre fréquence de commutation à chaque état de puissance du moteur d'aspiration (5).

2. Aspirateur selon la revendication 1, **caractérisé en ce que** l'unité de commande (4) comporte une unité d'exploitation (7) en tant que microrégulateur, qui peut être commandée par un réglage manuel ou par détecteur en tant que commande d'entrée de phase du moteur d'aspiration (5), la fréquence de commutation des moyens lumineux symbolisant une vitesse de rotation dans le champ d'affichage (1) qui peut être réglée par un réglage de puissance du moteur d'aspiration (5) par le biais d'un signal généré de l'unité d'exploitation (7) et d'une commande d'affichage (9).

3. Aspirateur selon l'une quelconque des revendications 1 à 2, **caractérisé en ce que** l'unité de commande (4) est reliée à des capteurs supplémentaires (11), qui détectent les états de fonctionnement et affichent dans le champ d'affichage (1) l'état de fonctionnement par des réglages de couleur supplémentaires des moyens lumineux par le biais de l'unité d'exploitation (7).
